# EUROPEAN PATENT APPLICATION

(11) **EP 2 207 104 A2**
(43) Date of publication of application: **14.07.2010**
(21) Application number: 10150031.2
(22) Date of filing: 04.01.2010
(51) Int. Cl.: G06F 17/22

(54) **System and method for transforming a UML model into an OWL representation**

(30) Priority: 06.01.2009 US 142739 P
(71) Applicant: Telefonaktiebolaget L M Ericsson (PUBL), 16483 Stockholm (SE)
(72) Inventor: Quinn, Karl, D14, Dublin (IE); Matusikowa, Katarina, Athlone (IE)
(74) Representative: Stasiewski, Piotr Grzegorz

(57) **Abstract**

A system and method for transforming a human-readable Unified Mark-Up Language (UML) model having a plurality of packages for design purposes into a machine-readable Web Ontology Language (OWL) representation having a plurality of OWL namespaces or a plurality of OWL documents for controlling network elements in a telecommunications network. A processor translates the human-readable UML model into one or more machine-readable OWL ontologies. In one embodiment, the processor produces one ontology (one file) with several namespaces. Thus, the translated ontology corresponds to the UML model, and each UML package in the UML model corresponds to a namespace. In another embodiment, the processor produces several ontologies (several files) corresponding to the UML packages in the UML model, wherein each ontology has just one namespace for its elements. The UML model in this embodiment corresponds to a base ontology importing all created ontologies.

## Description

### TECHNICAL FIELD

The present invention relates to communications networks. More particularly, and not by way of limitation, the present invention is directed to a system and method for transforming a Unified Mark-Up Language (UML) model into a Web Ontology Language (OWL) representation.

### BACKGROUND

The TeleManagement Forum's (TMF) Shared Information and Data (SID) Model is a common information model for enabling communication, integration and interoperability between telecommunication processes. In addition, the SID is used to provide a common vocabulary and understanding of business and system concepts. Furthermore, the SID model has been designed to be a standard representation of data using UML.

Object and Information Modeling in many domain areas is dominated by the UML. However, UML is a graphical language that cannot be easily processed by machine. UML was designed for human viewing to help understand concepts, rather than for direct use of UML models by an application. In comparison, ontology languages, such as OWL provide a means to model and capture the classes, properties, and relationships of a domain in a manner similar to UML. However, ontologies offer increased expressiveness within the language. In addition, ontology languages can be processed by machine at design time and at run-time while supporting logical inference and reasoning.

The UML version of the SID model is not directly utilized at run time within telecommunications applications. A semantic OWL version of the SID can be directly utilized at runtime. In addition, in relation to the UML version of the SID, it is the semantic OWL version of the SID that would natively have greater richness that enables greater expression when modelling/capturing the classes, properties, and relationships of the SID domain. Additionally, such richer expressiveness is especially useful when dealing with a range of complex domain models. In essence, and under these criteria, OWL is considered superior to UML. Therefore, a key driver for using a semantic version of the SID is to enable a semantic approach to management in telecommunications environment.

The impact of transforming UML to OWL may be found in network management research, specifically Autonomic Network Management (ANM). ANM aims to provide telecommunication networks with self-configuration, self-healing, self-protection, and self-organization mechanisms. These mechanisms can reduce operational costs, increase reliability, and add additional benefits when providing services in OSS/BSS environments. One possible approach to realizing ANM is through the use of Semantic Web technologies, which includes the use of ontology languages, such as OWL, to model information (including SID) and then reason and query these models and their instances.

One approach to translating the SID and other UML models into ontological representations employs Model Driven Architecture (MDA) principles. For this purpose, the Ontology Definition Meta-model (ODM) Adopted Specification (ODM specification 2007) was defined by the Object Management Group (OMG). The ODM focuses on business semantics that specifically enable capabilities of business semantics for MDA through formal grounding for its representation, management, interoperability, and application. The specification defines the independent meta-models for several international standards for ontology, related profiles, mapping, and conventional modeling paradigms such as entity-relationship modeling. The specification also defines an OWL meta-model that provides an informal mapping from UML to OWL.

Currently, UML model information is not used directly within telecommunications networks. Instead an engineer uses UML viewing software or a printed version to understand the relevant information model. This engineer then uses this information to carry out tasks in the network. In order to manually generate a SID compliant service, an engineer has to view the UML SID model, understand how it operates, and interface with the network to generate the service. If a service fails and an alternative has to be found, this manual operation is carried out once again in order to resume service. If a service is just one part of many services, then this task becomes extremely complex and the time to automatically generate a new or alternative service impacts on the revenue steam of the service provider. A system and method are needed to enable a telecommunications network to directly leverage the SID model in OWL format.

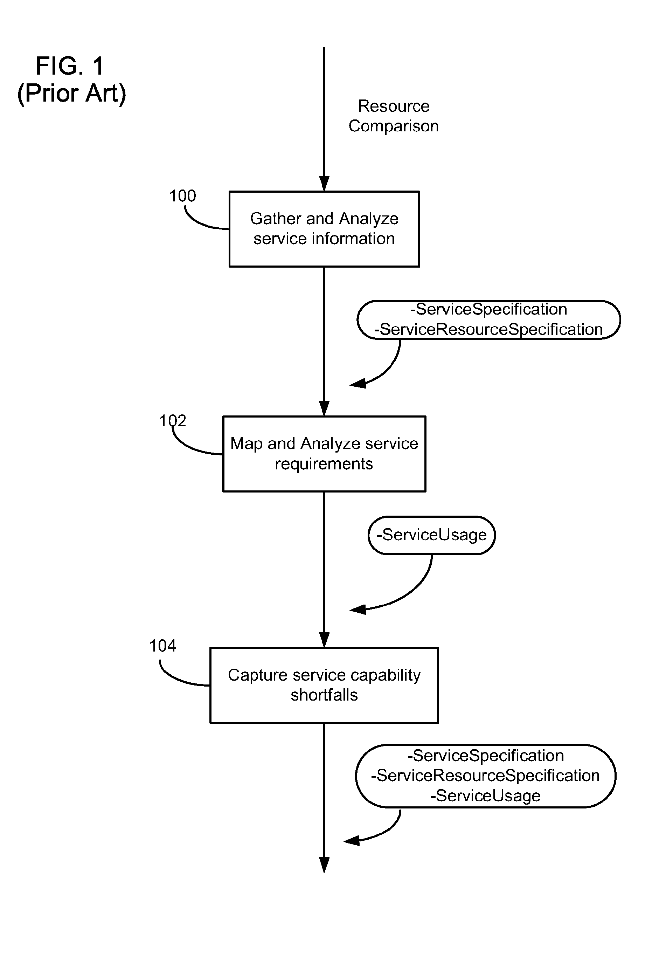

FIG. 1 is a simplified block diagram illustrating the interaction of a SID model with a set of TMF processes called enhanced Telecom Operations Map (eTOM). These processes are used directly in a telecommunications network. However, existing systems do not use the SID information model in a direct way due to technical constraints. In FIG. 1, a request for a resource comparison is made, which may include an inquiry on the type of network (e.g., 2G, 3G, or LTE network). This request triggers a process (Gather and Analyze Service Information) at 100, which produces an OWL output that is compliant with the **two aspects of the SID model: ServiceSpecification and** ServiceResourceSpecification. A Map & Analyze Service Requirements process at 102 and a Capture Service Capability Shortfalls process at 104 provides additional information (in OWL) to create a greater description of the service (for example, how the service will be used (ServiceUsage)). This typically is conducted directly in the telecommunications network at the OSS/BSS level. The telecommunications network has then automatically generated a SID compliant service description and usage model in OWL format. The dynamic nature of services and of subscribers' requirements of a telecommunications network makes the manual generation of SID compliant services complex and highly labor intensive.

In general and in current systems, converting SID from UML into a semantic OWL format is problematic. Currently, there is no solution for carrying out this conversion on a fully automated basis for more complex models. Current attempts to automate the transformation of such models lead to failure or the loss of information that was present in the UML version of the SID model. It is also necessary for many current solutions to manually carry out changes, checks, and additions. The main source of information loss is the translation of UML package construct for model with more than one package.

Currently, the ODM specification defines that a package in UML maps to an ontology in OWL. In UML, a package can be used as storage for its elements. However, in an OWL ontology, it is bound to its elements through the OWL document, where an ontology declaration and its elements are placed in one physical file or location. Furthermore, a UML package supports the embedding of other packages, whereas OWL ontology does not.

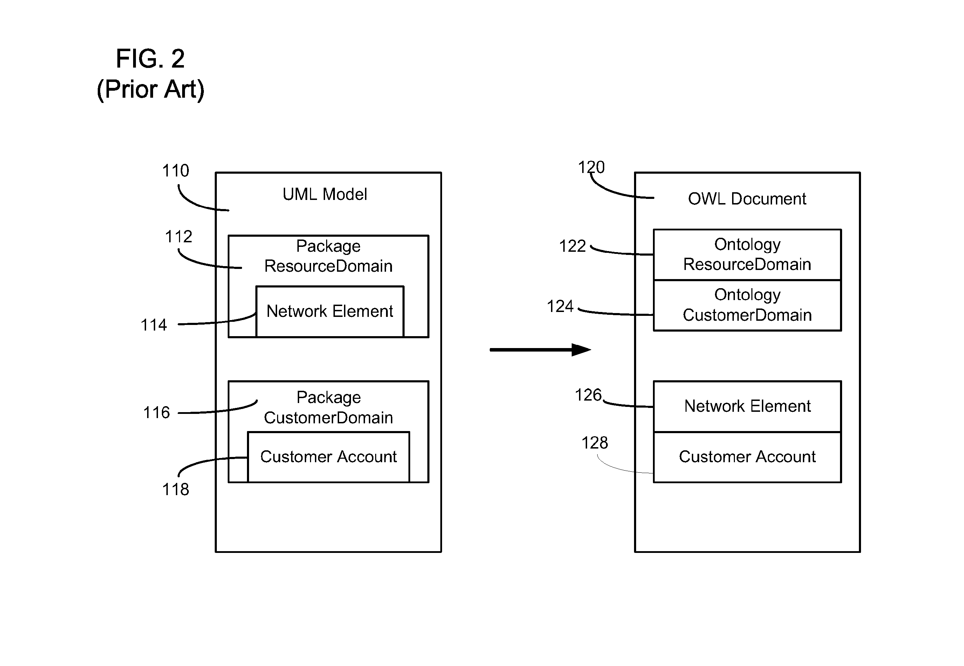

There are several problems with the existing systems. The first problem relates to element membership. In OWL, there is no connection of elements to particular ontology. Therefore, the package to which an element is a member is lost. FIG. 2 is a simplified block diagram illustrating element membership translation shortcoming in existing systems. FIG. 2 provides an example where a UML model 110 includes two UML packages that have separate elements. In this example, a first UML package 112 is named ResourceDomain having an element (UML class), NetworkElement 114. A second UML package 116, named CustomerDomain has an element 118 named CustomerAccount. When transforming from UML to OWL using the ODM definition, a resultant OWL document 120 has two ontologies 122 and 124 (ResourceDomain and CustomerDomain) and two elements 126 and 128 (NetworkElement and CustomerAccount). However, the original UML element/package relationship is lost. In effect, NetworkElement is no longer a part of ResourceDomain, and CustomerAccount is also is no longer a part of CustomerDomain.

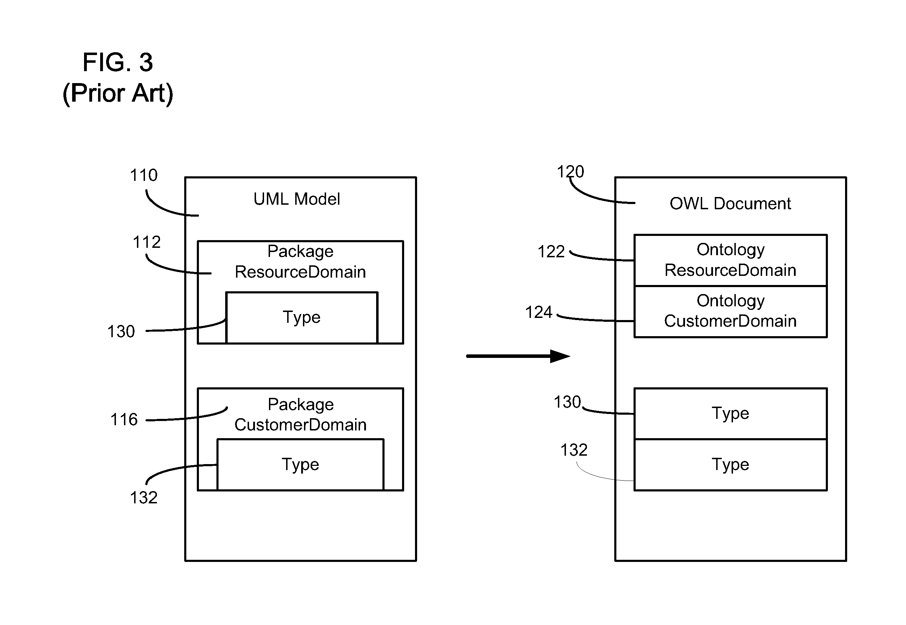

Another problem with existing systems involves unique element naming. In UML, it is possible to have two elements having the same name in different packages. In OWL, a URI is unique within the whole OWL universe. Therefore, translation of such elements may lead to duplicate Uniform Resource Identifier (URI) identities, which would be an invalid case for ontology as they are no longer unique. FIG. 3 is a simplified block diagram illustrating the unique element naming shortcomings in an existing system. For example, in FIG. 3, the UML packages ResourceDomain 112 and CustomerDomain 116 each have their own separate element (class) named Type (i.e., Type 130 and Type 132). When transforming from UML to OWL using the ODM definition, the resultant OWL document 120 has two elements with the same identification URI (e.g., both are named Type) in the same document. As a URI in OWL is the unique identifier across all considered ontologies, the two "Type" elements would be considered as one element. This may lead to the information in the two elements being merged, which could lead to error in the case where they are different. In addition, other adverse affects could include the non-raining of information as some ontological processors may only consider a first occurrence.

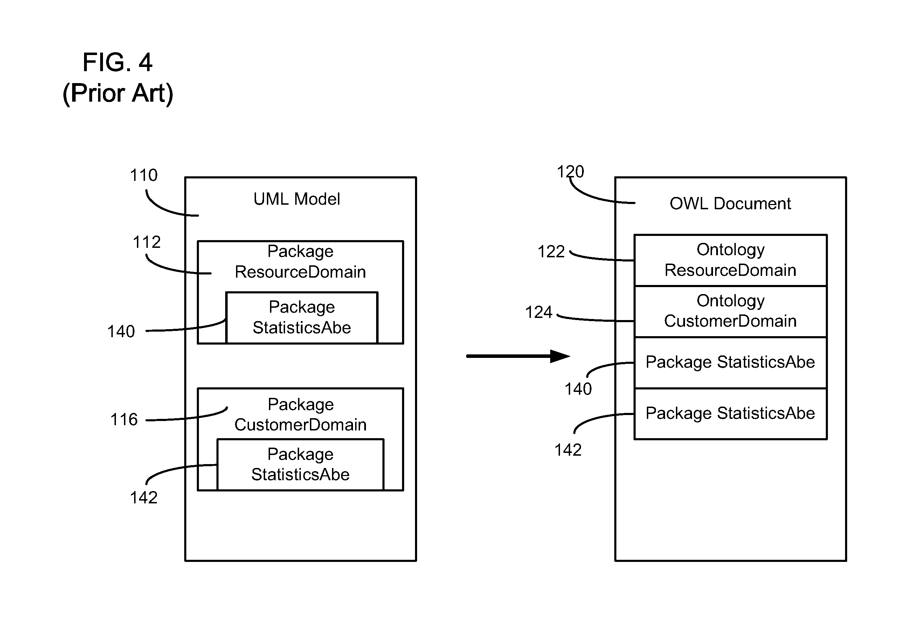

Another problem in existing systems involves embedded packages. Information about embedded packages is not translated because an ontology cannot contain other ontologies. This may lead to another form of the unique naming problem. The problem occurs as a package name in UML is unique within the embedding package only, while in OWL, an ontology URI is unique in the whole known OWL universe. FIG. 4 is a simplified block diagram illustrating the problem of information loss during package translation. For example, in FIG. 4, the UML package ResourceDomain 112 has a sub-package StatisticsABE 140 (a container for all statistics connected entities for resources) and the UML package CustomerDomain 116 has a sub-package 142 (the same name StatisticsABE but storing different statistical entities for customer). In this instance, this sub-package information will not be reflected in the ontological form. Furthermore, the ontology identification URI is unique, thus both packages will be treated as one ontology only.

All of the existing systems suffer from the problems discussed above and result in substantial and severe implications for a transformation mechanism. Thus, a system and method are needed which provides automation of UML to OWL ontology format.

### SUMMARY

The present invention provides a system and method for automatically mapping a human-readable UML model to a machine-readable OWL ontology format. The present invention enables the transformed ontological representation of the UML model to retain all element membership, element naming across packages, and reflect correct sub-packaging.

In one embodiment, the present invention is directed to a computer-implemented method of transforming a human-readable UML model having a plurality of packages for design purposes into a machine-readable OWL representation having a plurality of OWL namespaces for controlling network elements in a telecommunications network. The method begins by a processor translating the human-readable UML model into a machine-readable OWL ontology. Next, the processor translates every package of the UML model by generating a name of a new OWL namespace in the machine-readable OWL representation associated with each translated package. The processor then places a translated element associated with each translated package into a correct OWL namespace of the translated package.

In another embodiment, the present invention is directed to a computing system for transforming a human-readable UML model having a plurality of packages for design purposes into a machine-readable OWL representation having a plurality of OWL namespaces for controlling network elements in a telecommunications network. The computing system includes a processor, a first program instructions causing the processor to translate the human-readable UML model into an OWL ontology, a second program instructions causing the processor to translate every package of the UML model by generating a name of a new OWL namespace in the machine-readable OWL representation associated with each translated package, and a third program instructions causing the processor to place a translated element associated with each translated package into a correct OWL namespace of the translated package.

In the previous embodiments, the present invention produces one ontology (one file) with several namespaces. Thus, an ontology corresponds to a UML model, and a UML package corresponds to a namespace. Elements are placed in namespaces within the ontology. In an alternative embodiment, the present invention produces several ontologies (several files), wherein each ontology has just one namespace for its elements. Thus, the UML model corresponds to a base ontology importing all created ontologies, and each UML package corresponds to one ontology. Elements are placed into the ontology (the file).

Thus, in another embodiment, the present invention is directed to a computer-implemented method of transforming a human-readable UML model having a plurality of packages into a machine-readable OWL representation having a plurality of OWL ontology documents for controlling network elements in a telecommunications network. The method includes the steps of translating utilizing a processor, the human-readable UML model into a machine-readable OWL ontology; translating utilizing the processor, every package of the UML model by generating for each UML package, a new OWL ontology document in the machine-readable OWL representation; and placing utilizing the processor, a translated element associated with each translated ontology into a correct ontology document. For each translated OWL ontology document, the processor creates a Uniform Resource Identifier (URI), an ontology, a file in which the ontology is written, and an ontology document for representing the file in the OWL domain.

Preferably, the step of translating the UML model includes the steps of generating a base ontology; creating a base file represented by a base document; and locating the base ontology in the base file.

Preferably, said step of translating the UML model further comprises the step of adding an import statement for every created ontology into the base ontology.

Preferably, the step of generating a base ontology includes utilizing a base URI from a base URI and UML model name to generate the base ontology; and the step of locating the base ontology in the base file includes writing the base document and base ontology to the base file.

Preferably, the name of a new OWL ontology includes the base URI and name of the UML model and all embedded packages associated with the translated ontology.

In another embodiment, the present invention is directed to a computing system for transforming a human-readable UML model having a plurality of packages into a machine-readable OWL representation having a plurality of OWL ontology documents for controlling network elements in a telecommunications network. The computing system includes a processor and first, second, and third program instructions. The first program instructions cause the processor to translate the human-readable UML model into a machine-readable OWL ontology. The second program instructions cause the processor to translate every package of the UML model by generating for each UML package, a new OWL ontology document in the machine-readable OWL representation. For each OWL ontology document, the processor creates a URI, an ontology, a file in which the ontology is written, and an ontology document for representing the file in the OWL domain. The third program instructions cause the processor to place a translated element associated with each translated ontology into a correct ontology document.

Preferably, the instructions causing the processor to generate a base ontology cause the processor to utilize a base URI and UML model name to generate the base ontology; and the instructions causing the processor to locate the base ontology in the base file cause the processor to write the base document and base ontology to the base file.

Preferably, the computing system further comprises fourth program instructions causing the processor to add an import statement for every created ontology into the base ontology.

Preferably, the name of a new OWL ontology includes the base URI and name of the UML model and all embedded packages associated with the translated ontology.

### BRIEF DESCRIPTION OF THE DRAWINGS

In the following section, the invention will be described with reference to exemplary embodiments illustrated in the figures, in which:
FIG. 1 (Prior Art) is a simplified block diagram illustrating the interaction of a SID model with a set of TMF processes;
FIG. 2 (Prior Art) is a simplified block diagram illustrating element membership translation shortcoming in existing systems;
FIG. 3 (Prior Art) is a simplified block diagram illustrating the unique element naming shortcomings in an existing system;
FIG. 4 (Prior Art) is a simplified block diagram illustrating information loss during package translation;
FIG. 5 is a simplified block diagram illustration the relationship between several definitions in a UML model;
FIG. 6 is a simplified block diagram of a transformation system in one embodiment of the present invention;
FIG. 7 illustrates an example of a mapping algorithm in pseudo-code in a first embodiment of the present invention;
FIGS. 8A and 8B are block diagrams of different embodiments of a network management system and a plurality of Network Elements in a telecommunications network;
FIG. 9 is a flow chart illustrating the steps of transforming UML to OWL ontology format in the first embodiment of the present invention;
FIG. 10 is a simplified block diagram illustrating a translation from a UML model to an OWL document using the algorithm of FIG. 7;
FIG. 11 is a simplified block diagram illustrating the principal of how translated ontologies retain embedding and referencing information in the second embodiment of the present invention;
FIG. 12 illustrates an example of a package to ontology to file Mapping Algorithm in pseudo-code of FIG. 11;
FIG. 13 is a flowchart illustrating the steps of performing a package to ontology to file mapping in the second embodiment of the present invention; and
FIG. 14 is a simplified block diagram illustrating a translation from a UML model to a plurality of OWL documents using the algorithm of FIG. 12.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

The present invention is a system and method for automatically mapping a human-readable UML model to a machine-readable OWL ontology representation. The present invention enables the transformed ontological representation of the UML model to retain all element membership, element naming across packages, and reflects correct sub-packaging. In a first exemplary embodiment, the present invention produces one ontology (one file) with several namespaces. Thus, an ontology corresponds to a UML model, and a UML package corresponds to a namespace. Elements are placed in namespaces within the ontology. In a second exemplary embodiment, the present invention produces several ontologies (several files), wherein each ontology has just one namespace for its elements. Thus, the UML model corresponds to a base ontology importing all created ontologies, and each UML package corresponds to one ontology. Elements are placed into the ontology (the file).

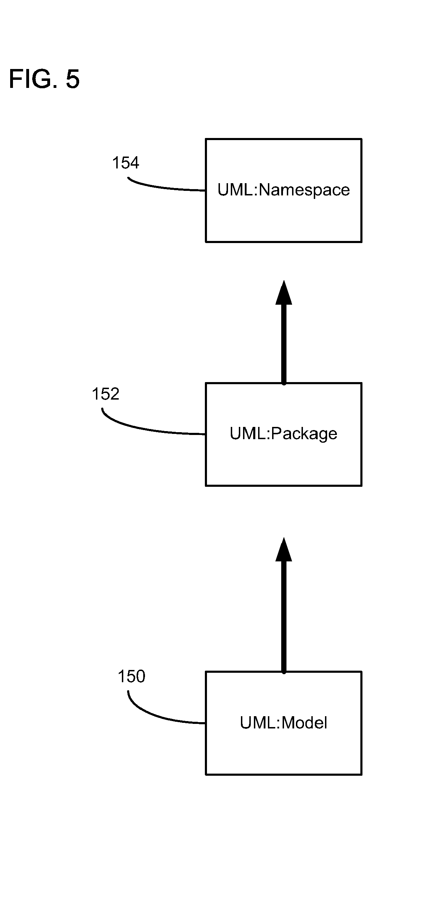

FIG. 5 is a simplified block diagram illustration the relationship between several definitions in a UML model. The present invention utilizes the UML definition for Namespace, Package, and Model. As illustrated in FIG. 5, a UML:Model 150 is a specification of a UML:Package 152 and a UML:Namespace 154 is a generalization of the UML:Package 152. These concepts in UML are semantically close where UML:Namespace identifies named elements by name which can own other named elements. The UML:Package is used to group packageable elements and provides a namespace for the elements. UML:Model contains a hierarchical set of elements which describe the system being modeled.

In OWL, the corresponding concepts are namespace and ontology.
An OWL ontology is a formal specification of concepts in some area of interest similar to a UML Model. However, unlike UML, OWL is intended to be used when the information needs to be processed by applications. The OWL (XML) Namespace serves to avoid confusion in cases where there are elements from different modules placed in one physical document. Elements are placed in a namespace using an expanded name consisting of the namespace name and element local name, which avoids collisions when different software packages use the same element name or attribute. Thus, it can be seen semantically that a UML Model can be mapped into an OWL Ontology and a UML Package (which is specialization of UML Namespace) into an OWL Namespace.

To solve the issues presented above, the present invention extends and modifies the defined UML to OWL transformation in a way that maps the UML model into an OWL ontology and a UML package into OWL (XML) namespace. Specifically, in the present invention, every mapped element has an assigned extended name consisting of a namespace name and a local name.

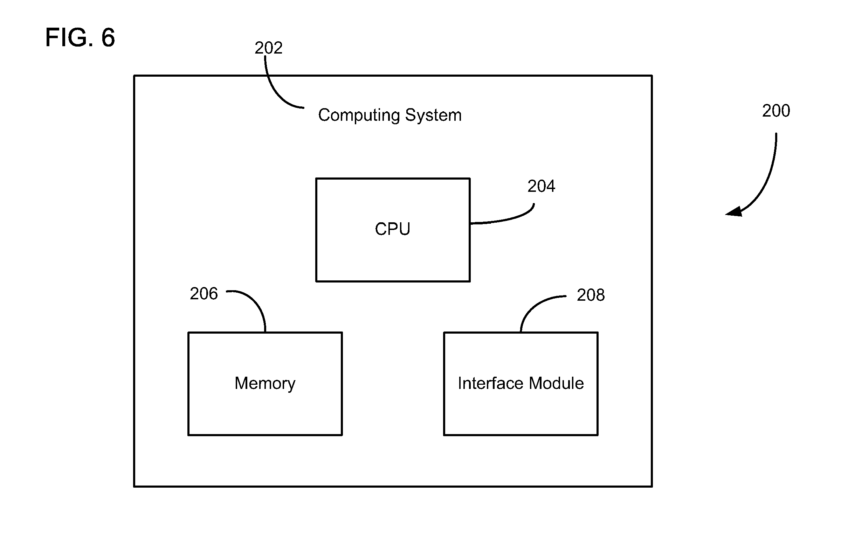

FIG. 6 is a simplified block diagram of a transformation system 200 in the first embodiment of the present invention. The system includes a computing system 202 having a central processing unit (CPU) or processor 204, a memory 206, and an interface module 208. The computing system communicates with an operator through the interface module. The CPU 204 may be any computer processor capable of operating an algorithm to be described below. The memory 206 may store relationship information and rules for transforming the UML to OWL ontology format.

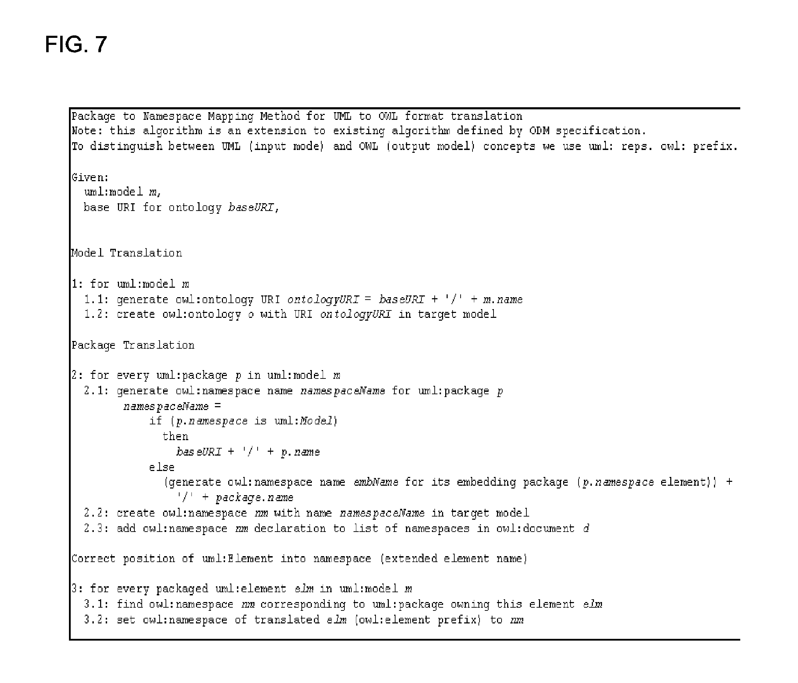

In one embodiment of the present invention, the algorithm uses a logical language, such as an ATLAS Transformation Language (ATL) language for model to model transformation. In such languages, a transformation is executed using rules to translate every element (e.g., model translation rule, package translation rule) and principally these rules can be executed in parallel. However, the following algorithm, illustrated in FIG. 7, can be used in sequence languages as well. Thus, steps show numbering for sequence languages are shown in FIG. 7. However, it should be understood that the steps may be executed in parallel and still remain in the scope of the present invention. FIG. 7 illustrates an example of a mapping algorithm in pseudo-code in a first embodiment of the present invention. The algorithm shows the 1:1 Package to Namespace, and Model to Ontology algorithm in pseudo-code format. There are, in essence, three main transformation steps that can be summarized as model translation, package translation, and element placement into namespace.

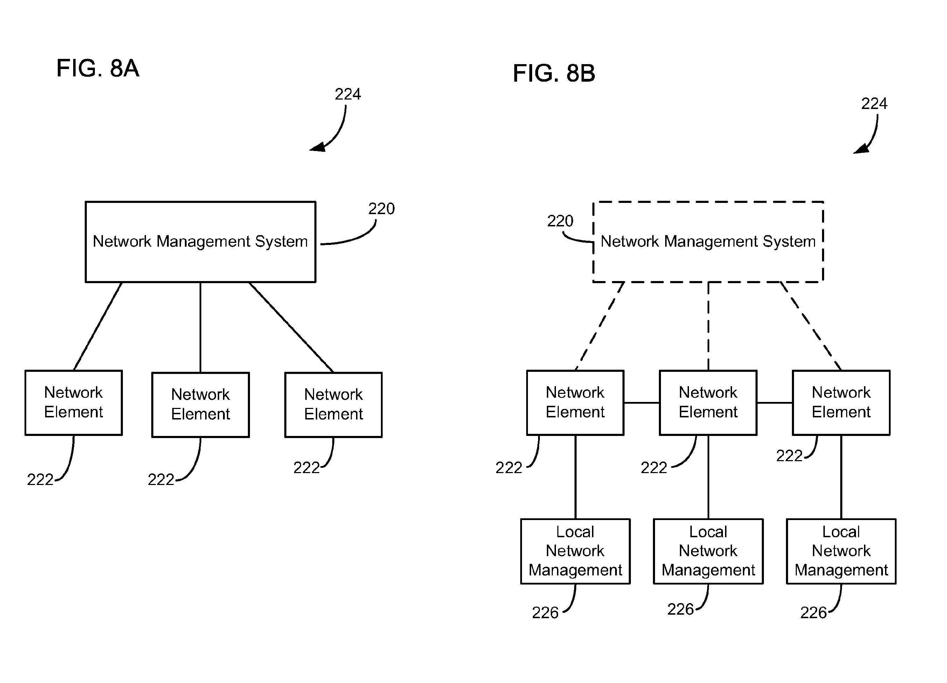

FIGS. 8A and 8B are block diagrams of different embodiments of a network management system and a plurality of Network Elements in a telecommunications network. Referring first to FIG. 8A, a centralized network management system 220 is connected to a plurality of Network Elements (NEs) 222 in a telecommunications network 224. The UML model describes the plurality of NEs operating in the telecommunications network and the relationship between the NEs. The UML model is human-readable but is not capable of being machine processed during runtime. The computing system 202 transforms the UML model (document) to the OWL ontology representation. In the present invention, the OWL ontology contains all the information that was in the original UML document without any loss. This OWL ontology is capable of being processed (machine-readable) during runtime. The OWL ontology is utilized in the telecommunications network for managing and controlling applications to control and manage the NEs 222 and support services within the telecommunications network. A series of queries originating from the application are used to provide this control and management of the NEs by the network management system 220. These queries are then answered by a processor adapted for handling the ontology. The processor then utilizes the populated OWL ontology.

Referring now to FIG. 8B, the central network management system 220 is for coordination only and may not be present; Thus, the central network management system and its connections to the NEs 222 are shown in phantom. Every NE has an attached local network management unit 226. Each local network management unit contains network information (in the form of an ontology populated with instances) and executes parts of the overall network management function. Each NE contains an ontology file and an execution mechanism, which collaborates with other NEs on network management. Through the ontology populated with instances, each NE has knowledge about itself and its context and also information about how to act in different network management situations. Whenever there is some activity in the neighboring network, the management unit evaluates if an action is needed. Overall network management is realized by collaboration of network elements.

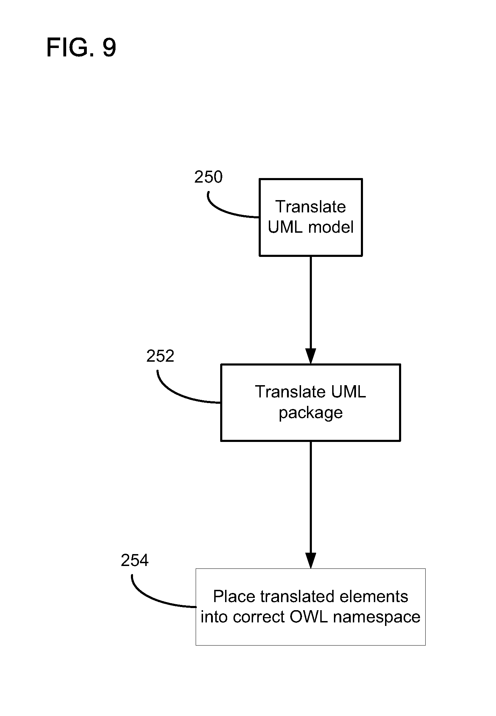

FIG. 9 is a flow chart illustrating the steps of transforming UML to OWL ontology format in the first embodiment of the present invention. With reference to FIGs. 6-9, the method will now be explained. In the first step 250, the UML model is translated by the CPU 204. In this step, a correct URI for OWL ontology is generated from the base URI and UML model name (see 1.1 of FIG. 7). The ontology with this URI is then created in the output OWL document (see 1.2 of FIG. 7). In the next step 252, the UML package is translated by the CPU 204. For every package, a name (URI) of new namespace (see 2.1 of FIG. 7) is generated. The algorithm is preferably defined in recursive fashion. The final name is a chain starting with base URI and model name, including all embedding packages of this package from the root to the current package divided by ('/') character. A namespace with this URI is created in the target model (see 2.2 of FIG. 7) and assigned to the documents list of namespaces (see 2.3 of FIG. 7). Next, the translated elements are placed into the correct OWL namespace in step 254 by the CPU 204. When using namespaces, every element is preferably placed into a correspondingly correct namespace. For every element, a proper namespace is found (see 3.1 of FIG. 7). This is the namespace that corresponds to the package where the element is placed. Consequently, the element is placed into the namespace (see 3.2 of FIG. 7) using an extended element name by adding a namespace prefix to the local element name. These three actions contribute an algorithm that enables a UML document to be translated to an ontological (OWL) version that correctly reflects the structure, content, and associations.

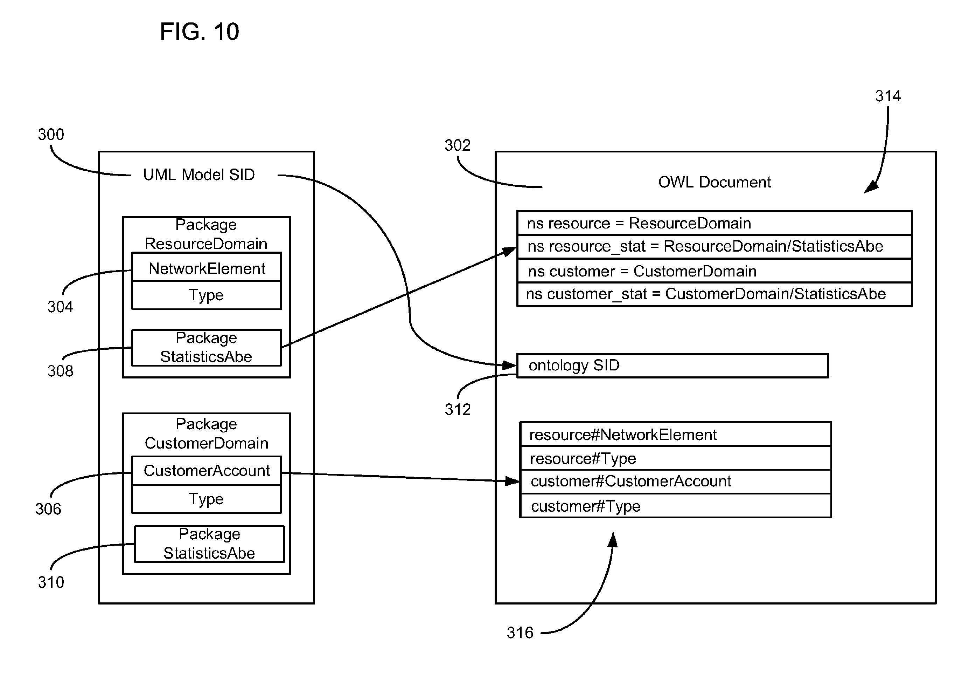

FIG. 10 is a simplified block diagram illustrating a translation from a UML model to an OWL document using the algorithm of FIG. 7. In FIG. 10, this is shown in the context of a translation from a UML model Shared Information and Data (SID) 300 to an OWL document 302. In contrast to the prior art and shortcomings illustrated in FIG. 2, the present invention correctly translates the UML model to the OWL representation. The elements (e.g., elements 304 and 306) are now in the correct namespace. Thus two elements with the same name in different packages do not cause a name collision in OWL. Embedded packages (e.g., packages 308 and 310) are also recognized correctly because of a folder-like construction of namespace names. The UML model SID 300 is translated into an ontology SID 312, which provides ontology declarations in the OWL document. The OWL document also includes a namespace declaration part 314 and an elements definition part 316.

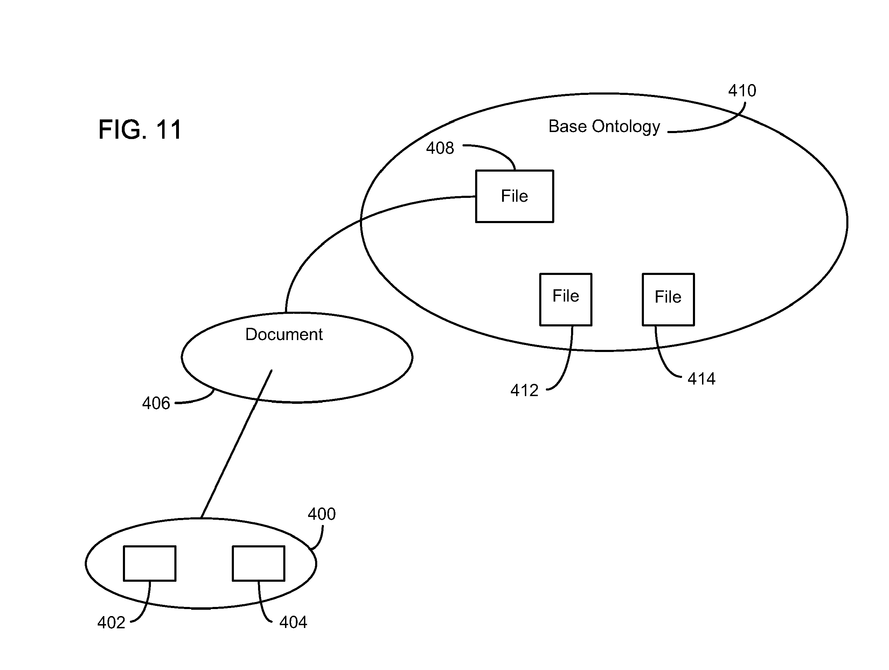

FIG. 11 is a simplified block diagram illustrating the principal of how translated ontologies retain embedding and referencing information in the second embodiment of the present invention. An OWL ontology 400 imports all reference packages 402 and 404 (referenced and embedded packages). This ontology is assigned to a document 406. The document 406 is then written to a file 408. Furthermore, elements are assigned to this file, and a set of files are assigned to a base ontology 410 having a plurality of files 412 and 414.

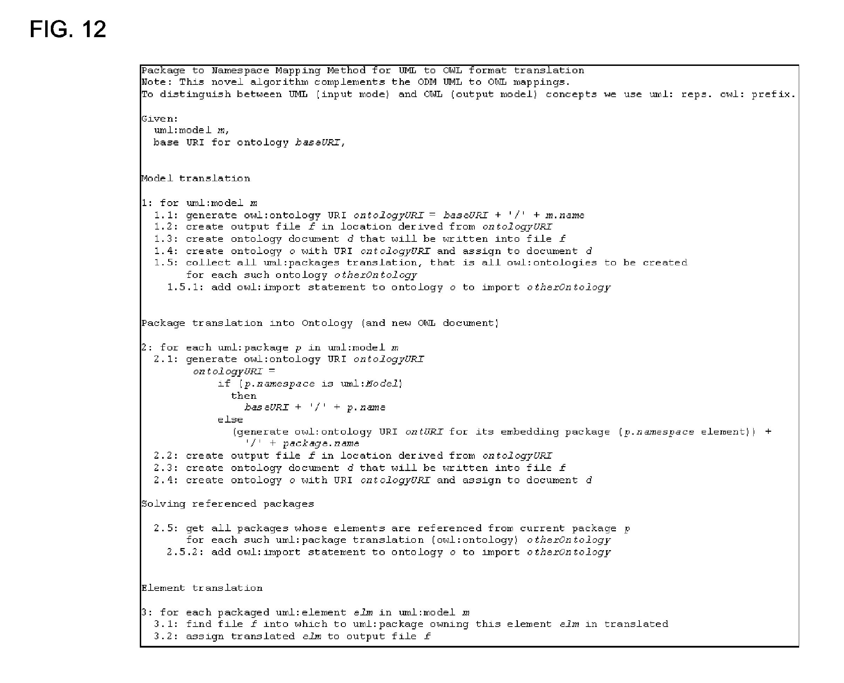

FIG. 12 illustrates an example of a package to ontology to file Mapping Algorithm in pseudo-code of FIG. 11. The algorithm preferably uses a logical language such as ATL language for model to model transformation. In such languages, a transformation is executed using rules to translate every element (e.g. model translation rule, package translation rule) and principally these rules can be executed in parallel. However, the algorithm may be used in sequence languages as well. Thus, FIG. 12 illustrates the steps with numbers.

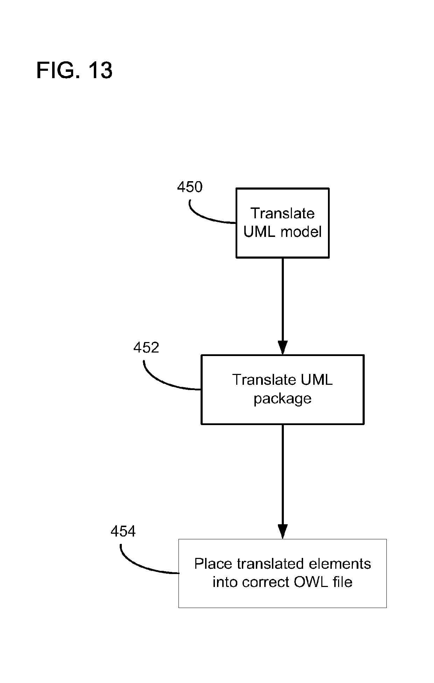

FIG. 13 is a flowchart illustrating the steps of performing a package to ontology to file mapping in the second embodiment of the present invention. With reference to FIGs. 6 and 11-13, the method will now be explained. In step 450, the UML model is translated into a base ontology, such as an ontology containing all translated ontologies (imports) by the CPU 204. When opened, this base ontology shows the OWL universe, which contains information represented in the original UML model. To realize this, a URI for base ontology is generated first using the given base URI and model name (see 1.1 in FIG. 12). For example, http://www.tmforum.org is the base URI and "SID" is the name of the model. Thus, the resulting ontology URI is http://www.tmforum.org/SID. A file is created (see 1.2 in FIG. 12) that corresponds to this URI (e.g../SID.owl) and an ontology document is created (see 1.3 in FIG. 12) that represents this file in OWL. The ontology with the generated URI is created and assigned to the document and then written into the created output file (see 1.4 in FIG. 12). For package imports, an import statement is preferably added for every ontology (see 1.5.1 of FIG. 12), as the main ontology has to contain all the ontologies created by translated UML packages.

Next, in step 452, each package is translated by the CPU 204. The transformation of a UML package is similar to the UML model transformation. For every UML package, it is necessary to generate a name (i.e., a URI) for a new ontology (see 2.1 of FIG. 12). The algorithm is preferably defined in a recursive fashion. The final name is a chain string starting with the base URI and the UML model name. This chain string includes the names of all embedding packages of this UML package from the root to the current UML package divided by a forward slash ('/') character, such as:
http://www.tmforum.org/SID/ResourceDomain/StatisticsABE.
A file corresponding to this URI is created in the appropriate folder (see 2.2 of FIG. 12), such as ./SID/ResourceDomain/StatisticsABE.owl. An OWL document 406 is then created to represent this file (see 2.3 of FIG. 12). An ontology with this generated URI is created in the target file (see 2.4 of FIG. 12) and assigned to the document. To solve the inter-package references, all UML packages whose elements are referenced from the current UML package (see 2.5 of FIG. 12) are found and an import statement for each such UML package (see 2.6 of FIG. 12) is added. Thus, the new ontology can access all referenced information.

Next, in step 454, the element is placed into the correct OWL file (e.g., file 408 in FIG. 11) by the CPU 204. When using package to ontology to file mappings, every element needs to be placed into the correct file. In this step, it is not necessary to translate elements themselves, as such transformation is defined in Object Management Group: Ontology Definition Meta-model specification. 2007 for each specific type of element. In the algorithm shown in FIG. 12, for every element, a proper file is found (see 3.1 of FIG. 12) based on its UML package translation. Consequently, the element is placed into this file (see 3.2 of FIG. 12).

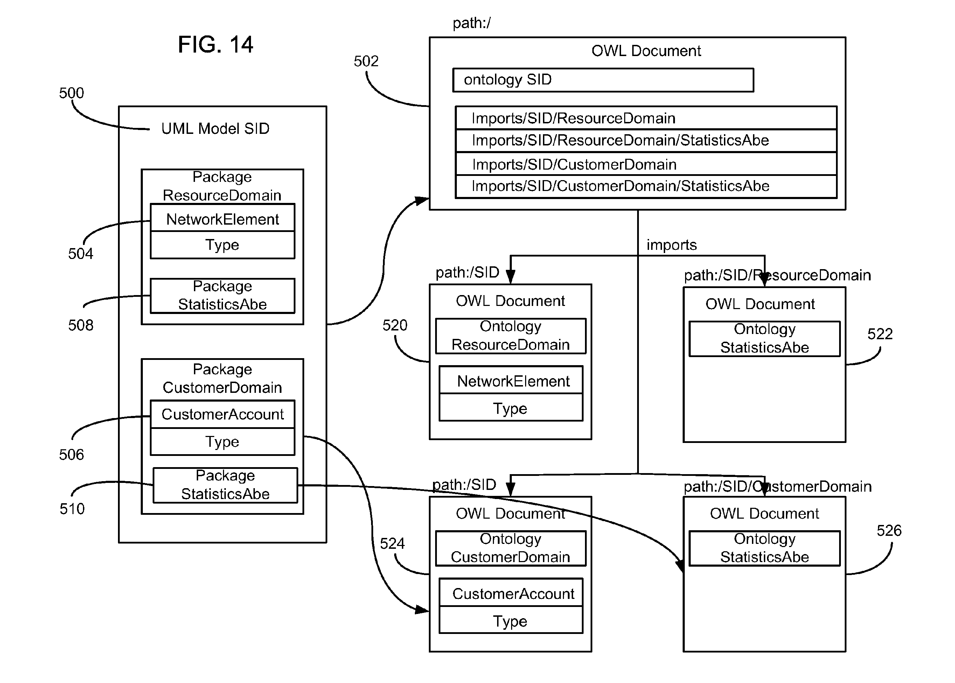

FIG. 14 is a simplified block diagram illustrating a translation from a UML model to a plurality of OWL documents using the algorithm of FIG. 12. FIG. 14 illustrates translating the UML model 500 to OWL representation 502 using problematic examples from section 1.2 of FIG. 12. In FIG. 14, the ontology names are shortened, however, for identification purposes, the full URI are preferably used. The element membership of UML package (ontology) is now preserved. Thus, two elements (e.g., elements 504 and 506) with the same name in different packages do not cause a name collision in OWL. Furthermore, embedded packages (e.g., 508 and 510) are also recognized correctly due to the construction of file names using folders, such as depicted in FIG. 14 (e.g., OWL documents 520, 522, 524, and 526).

The present invention provides a system and method of transforming UML models to OWL representations. However, the present invention may be utilized to transform any UML representation to any ontological language and still remain in the scope of the present invention.

The present invention provides several advantages over existing translation systems. Currently, there is a vast amount of domain models currently developed in UML and a mechanism for converting these models to a more interoperable and run-time usable format is a valuable asset. The present invention provides a system and method for UML to OWL transformation and makes it useable for complex models. The present invention enables translation of the initial SID document and, as an output, provides its ontological version, which can be processed by an application to provide reasoning and querying abilities. This automatic conversion aspect is a challenge in automated systems. The benefits for using semantic to enable Autonomic Network Management have been discussed earlier. However, there are other application areas where the present invention is effective. In order to offer zero touch management, it is important to offer information models that can be processed and understood by the management systems. Thus, a semantic version of the SID is imperative in areas such as Long Term Evolution/System Architecture Evolution (LTE/SAE) where such management approaches are sought. Therefore, the present invention is an enabler to added semantics and, thus, more open interfaces. An additional advantage of the present invention is the capability of transforming complex UML models and existing transformation engines, which is not possible in existing systems. The present invention enables the correct transformation from SID UML to the semantic OWL format of SID while preserving information. Information that was previously lost in existing systems is now maintained in the present invention. In the second embodiment described above, the present invention also conforms to the OMG's ODM standard specification for transforming UML to OWL. In addition, the present invention provides an automated process that removes the need for the already stated manual aspects of transformation as is necessary in existing system.

As will be recognized by those skilled in the art, the innovative concepts described in the present application can be modified and varied over a wide range of applications. Accordingly, the scope of patented subject matter should not be limited to any of the specific exemplary teachings discussed above, but is instead defined by the following claims.

## Claims

1. A computer-implemented method of transforming a human-readable Unified Mark-Up Language (UML) model having a plurality of packages for design purposes into a machine-readable Web Ontology Language (OWL) representation having a plurality of OWL namespaces for controlling network elements in a telecommunications network, the method comprising the steps of:
translating, utilizing a processor, the human-readable UML model into a machine-readable OWL ontology;
translating, utilizing the processor, every package of the UML model by generating a name of a new OWL namespace in the machine-readable OWL representation associated with each translated package; and
placing, utilizing the processor, a translated element associated with each translated package into a correct OWL namespace of the translated package.

2. The method according to claim 1, wherein the step of translating the UML model to an OWL ontology includes the step of generating an OWL Uniform Resource Identifier (URI) from a base URI and a name of the UML model.

3. The method according to claim 1, wherein the name of a new OWL namespace is an OWL Uniform Resource Identifier (URI).

4. The method according to claim 3, wherein the step of translating a package of the UML model by generating a name of a new OWL namespace in the OWL representation includes the steps of:
creating the OWL URI in the OWL representation and assign the OWL URI to a namespace; and
adding the OWL URI to a list of namespaces within the OWL representation.

5. The method according to claim 3, wherein the URI is a chain starting with a base URI and model name having a name of each embedded packages within the package from the root to the current package.

6. The method according to claim 1, wherein the step of placing a translated element of each translated package into a correct OWL namespace includes placing the translated element into the correct OWL namespace using an extended element name added by a namespace prefix and a local element name associated with the translated element.

7. A computing system for transforming a human-readable Unified Mark-Up Language (UML) model having a plurality of packages for design purposes into a machine-readable Web Ontology Language (OWL) representation having a plurality of OWL namespaces for controlling network elements in a telecommunications network, the computing system comprising:
a processor;
first program instructions causing the processor to translate the human-readable UML model into an OWL ontology;
second program instructions causing the processor to translate every package of the UML model by generating a name of a new OWL namespace in the machine-readable OWL representation associated with each translated package; and
third program instructions causing the processor to place a translated element associated with each translated package into a correct OWL namespace of the translated package.

8. The computing system according to claim 7, wherein the first program instructions include instructions that cause the processor to generate an OWL Uniform Resource Identifier (URI) from a UML model name and base URI of the UML model.

9. The computing system according to claim 7, wherein the name of a new OWL namespace is an OWL Uniform Resource Identifier (URI).

10. The computing system according to claim 9, wherein the second program instructions include instructions that cause the processor to create the OWL URI in the OWL representation and to assign the OWL URI to namespace and add the OWL URI to a list of namespaces within the OWL representation.

11. The computing system according to claim 9, wherein the URI is a chain starting with a base URI and model name having a name of each embedded packages within the package from the root to the current package.

12. The computing system according to claim 7, wherein the third program instructions include instructions that cause the processor to place the translated element into the correct OWL namespace using an extended element name added by a namespace prefix and a local element name associated with the translated element.

13. A computer-implemented method of transforming a human-readable Unified Mark-Up Language (UML) model having a plurality of packages into a machine-readable Web Ontology Language (OWL) representation having a plurality of OWL ontology documents for controlling network elements in a telecommunications network, the method comprising the steps of:
translating utilizing a processor, the human-readable UML model into a machine-readable OWL ontology;
translating utilizing the processor, every package of the UML model by generating for each UML package, a new OWL ontology document in the machine-readable OWL representation, wherein for each OWL ontology document, the processor creates:
a Uniform Resource Identifier (URI);
an ontology;
a file in which the ontology is written; and
an ontology document for representing the file in the OWL domain;
and
placing utilizing the processor, a translated element associated with each translated ontology into a correct ontology document.

14. A computing system for transforming a human-readable Unified Mark-Up Language (UML) model having a plurality of packages into a machine-readable Web Ontology Language (OWL) representation having a plurality of OWL ontology documents for controlling network elements in a telecommunications network, the computing system comprising:
a processor;
first program instructions causing the processor to translate the human-readable UML model into a machine-readable OWL ontology;
second program instructions causing the processor to translate every package of the UML model by generating for each UML package, a new OWL ontology document in the machine-readable OWL representation, wherein for each OWL ontology document, the processor creates:
a Uniform Resource Identifier (URI);
an ontology;
a file in which the ontology is written; and
an ontology document for representing the file in the OWL domain;
and
third program instructions causing the processor to place a translated element associated with each translated ontology into a correct ontology document.

15. The computing system according to claim 14, wherein the first program instructions include:
instructions causing the processor to generate a base ontology;
instructions causing the processor to create a base file represented by a base document; and
instructions causing the processor to locate the base ontology in the base file.
